# EUROPEAN PATENT APPLICATION

(11) **EP 2 774 495 A1**
(43) Date of publication of application: **10.09.2014**
(21) Application number: 14157711.4
(22) Date of filing: 04.03.2014
(51) Int. Cl.: A23L 1/318, A23L 1/325, A23L 1/314

(54) **Method for treating meat and fish**

(30) Priority: 04.03.2013 NL 2010387
(71) Applicant: Mer et Terre B.V., 4413 CE Krabbendijke (NL)
(72) Inventor: van Velzen, Robertus Wilhelmus, 4413 CE Krabbendijke (NL); Dingemanse, Jacobus Simon, 4413 CE Krabbendijke (NL)
(74) Representative: Jansen, Cornelis Marinus

(57) **Abstract**

This invention relates to a method for treating meat or fish with a salt-containing aqueous solution for influencing the organoleptic properties of the meat or the fish, wherein at most partly prepared meat or fish is contacted with the aqueous salt-containing solution. The aqueous salt-containing solution contains purified seawater, which is preferably seasoned. The invention makes it possible to produce meat or fish with a lowered content of sodium salts, in particular a lowered content of sodium, with a special and intense taste and taste sensation imparted to the meat or the fish.

## Description

This invention relates to a method for treating a meat or fish with a salt-containing aqueous solution, for influencing the organoleptic properties thereof, wherein at most partly prepared meat or fish is contacted with the aqueous salt-containing solution, according to the pre-characterizing clause of claim 1.

Marinating meat or fish in a salt solution is a technique which has been applied for a long time to optimize the organoleptic properties and to impart a particular taste to the end product. The treatment of meat with a salt solution is intended to effect a special taste sensation. The salt solution used for that purpose, besides including salt in the form of sodium chloride and possibly other sodium salts, typically contains an amount of sugar, aromas for imparting a desired or intense taste to the meat, nitrite for minimizing unwanted discoloration, vegetable or milk-derived proteins in replacement of the proteins present in the meat, thickeners such as, for instance, gum or starch or polysaccharide or a syrup thereof, for binding the moisture present. Phosphates are added because of their ability to increase the water binding capacity of the meat and to reduce shrinkage of the meat during cooking and processing. Salt, mostly sodium chloride, is responsible for solubilizing the muscle proteins and providing taste.

Nitrite usage is curbed by the government because of the carcinogenic risk. The government also wishes to curb the addition of phosphates to foods.

It is believed that in the treatment with a salt solution, the salt solution fills the voids between the cells of the meat or the fish. Osmosis and diffusion provide that an equilibrium is established between the salt solution and the surrounding meat, due to the difference in the amount of water, salt, flavouring in the salt solution and the amount of water in the cells and the substances dissolved in the cells. About the manner in which this equilibrium is established, divergent theories were developed. All sources seem to agree that the higher salt concentration causes denaturation of the proteins present in the meat. In cooking, the denatured proteins form a matrix in which the water molecules are retained, so that the water content of the meat can be kept high.

It is known that salt, in particular sodium salts and sodium chloride, can improve or enhance the taste of foods in that bitterness is suppressed and an improved aroma is obtained. Salt can also be added to improve the texture, as binder, to control fermentation, for developing colour, as a carrier, and for the taste. Salt is naturally present in numerous foods. It has been determined, however, that prepared foods often contain unduly large amounts of salt in the form of sodium chloride. Sodium is important for controlling, *inter alia,* the amount of water in the human body, maintaining a normal pH of the blood, transmitting signals along the nerves, and helping in muscle contraction. However, an excess of salt in the body, in particular sodium chloride, more particularly sodium ions, is harmful to health. A surplus may be conducive to the development of blood pressure elevation and constitutes a risk factor for cardiovascular diseases. Too much salt is also a risk factor for gastric cancer and osteoporosis. Various government initiatives seek to make the consumer aware of the risks associated with too high a consumption of sodium chloride as salt, and are aimed at bringing about a reduction of the amount of hidden salt present in prepared foods.

KR20060039469 describes, for instance, injecting chicken meat with a mixture of fruit juice, herbs and deep sea water, for obtaining soft and tasty meat. Deep sea water is used because of its minor bacterial contamination. Such a preparation, however, entails the drawback of providing meat having a grey look, unappealing to the consumer. The meat is experienced as dry and tough, but also as flavourless and with a taste perception remote from the taste familiar to the Western consumer for meat and meat products.

Accordingly, there exists a need for foods, in particular for meat, meat products and fish, that contain less salt, but look appealing and from an organoleptic point of view are experienced as tasty by the consumer. In particular, there is a need for meat, meat products and fish of such a quality, with a lowered content of sodium salt.

Accordingly, the object of this invention is to provide a method for producing meat, meat products and fish with a lowered salt content, in particular a lowered content of sodium salt, that not only look appealing but are also experienced as tasty.

This is achieved according to this invention with a method that has the technical features of the characterizing clause of the first claim.

To this end, this invention is characterized in that the aqueous salt-containing solution comprises purified seawater and an amount of a nitrite-containing salt.

In the following, for simplicity, reference will be made to meat, meat products, and fish. In the context of this invention, 'meat' and 'meat products' are understood to refer to any common kind of meat, for instance, beef, for instance, shoulder, thigh, entrecote, tenderloin, roast beef, various kinds of steak, stewing steak, braising steak etc.; pork, for instance, shoulder, fillet, thigh, entrecote, ribs, medaillon, shoulder piece, pork tenderloin, shoulder of ham, ham, etc.; lamb, such as, for instance, the shoulder, the leg, the breast, cutlets, fillet; horsemeat, game, etc.; fowl, for instance, turkey, chicken, guinea fowl, for instance, the whole fowl or pieces thereof, such as legs, fillet or breast meat, etc. These kinds of meat typically consist of muscle meat which forms a compact mass, has a good consistency and softness and which can be simply cut into thin slices. 'Meat' and 'meat products' are also understood to refer to offal, or organ meat, for instance, kidneys, liver, brains; meat that contains smaller pieces of meat, such as minced meat, sausage, for instance, fried sausage, smoked sausage, white sausage, black pudding, luncheon sausage and all other known kinds of sausage. The method of this invention is suitable for use with raw meat, but can also be used for giving a special flavour to partly prepared or partly cooked meat. In the context of this invention, 'fish' is understood to refer to a whole fish, the muscles of the fish, in particular the white and the dark muscles, ground or minced fish and any other parts of the fish that are suitable for processing as described above. The method of this invention is suitable for use with raw meat or raw fish, but can also be used for giving a special flavour to fish that is partly prepared or cooked.

The inventors have surprisingly found that the storage life of the meat and the fish treated with the aqueous salt-containing solution of this invention is not adversely affected if no additional preservatives are added, and that it is not necessary to add further preservatives to preserve the keeping properties of the meat and the fish. Surprisingly, it has also been found that the method of this invention, upon cooking of the meat or the fish in fat, for instance oil or butter or a combination thereof, provides a product with an agreeably brown crust and neatly browned, crispy sides. It is believed that the organic constituents that are naturally present in the seawater contribute to this. In general, the consumer appreciates that particular kinds of fish such as salmon have a typical colour; raw and prepared meat are also expected to have a particular colour. The presence of an amount of nitrite in the aqueous salt-containing solution of this invention contributes towards achieving a colour that the consumer is familiar with for that product, for instance, a red or pink colour for meat, meat products and particular kinds of fish.

The method of this invention has moreover been found to be able to cause a tenderization of the meat or the fish, as a result of which the meat or the fish is not only juicier but also feels tenderer and more agreeable upon consumption, also if no phosphates are added to the treatment liquid. Phosphates are generally added to a treatment solution for meat, or are injected into meat, in particular ham, to provide elasticity. The fact that the use of additives such as phosphates is superfluous provides a huge advantage, certainly in the light of the improvement of the health aspects related to the consumption of meat or fish. Also, with the absence of phosphates, the risk can be obviated of a disagreeable sticky plug formation in the mouth, which is often observable in the known types of meat in that a sticky-feel moisture runs out of the ham upon manipulation and/or consumption thereof. Methods that utilize phosphates moreover have the disadvantage that phosphates react with seawater, so that the seawater binds and thickens uncontrollably. The result is an aqueous solution of a viscosity so high that it is not sprayable anymore and so is no longer injectable or otherwise usable in automated industrial production, on a large scale. The inventors have in fact found that the nitrite-containing salt hardly, or only slightly so, affects the viscosity of the seawater.

The inventors have also established that particularly meat can be cut well with hardly any risk of crumbling. This in contrast to meat that is pretreated with seawater to which no nitrite-containing salt has been added and which is very hard to cut and exhibits a high tendency to crumble. Such crumbling leads to unduly great losses, especially in industrial cutting of the meat.

The seawater and the nitrite-containing salt thus cooperate to obtain meat or fish having a good storage stability, a desired colour and taste effect and good mechanical processability, with a lower salt content.

The nitrite-containing salt is preferably added to the aqueous solution in a concentration ranging from 5 to 250 grams per litre, preferably 10-200 grams, more preferably 25-175 grams, but other amounts can also be used, in an amount of 50-150 grams per litre. Preferably, a nitrite-containing salt is used that contains at most 5 wt.% of nitrite, more preferably at most 2.5 wt.% of nitrite, most preferably at most 1 wt.% of nitrite. The nitrite may be partly replaced by a colouring agent which imparts the desired colour, allowing the nitrite concentration to be lowered to below 1 wt.%, being the maximum envisaged by the government. The colouring agent is preferably a natural colouring agent, more preferably natural herbs. The special properties and composition of the seawater allow the amount of added nitrite to be considerably lowered with respect to the methods known from the prior art, without the storage stability being adversely affected.

Nitrite-containing salts are generally known, and are commercially available. They are often called butcher's salts. Examples of commercially available nitrite-containing salts are known, for instance, as salvianda salt or colorozo salt, but also other salts that contain nitrite stemming from natural products, for instance from mushrooms or varieties thereof, can be used as well. The amount of nitrite-containing salt that is added to the aqueous salt-containing solution can be varied within wide limits and is typically chosen by the skilled person taking into account the intended taste and colour and the nitrite content.

Known nitrite-containing salts typically also contain an amount of common salt, substantially as sodium chloride. The inventors have now found that the use, in this invention, of nitrite-containing salt that contains the common sodium chloride salt yields meat, meat products, and fish of a taste that closely approximates the taste and taste intensity familiar to the consumer, even with a lowered salt content of the end product. This cannot be obtained if seawater alone is used. In fact, the inventors have found that for a taste perception such as the consumer is familiar with, the salt content of the meat or the fish needs to be sufficiently high, which requires the use of an aqueous solution having a sufficiently high salt concentration. Such a concentration is not feasible by the use of seawater or concentrated seawater. In fact, the inventors have established that seawater can only be concentrated to a limited extent, because when concentration is carried out to an undue extent, unwanted flocculation occurs.

Also if use is made of a nitrite-containing salt that contains an amount of sodium chloride salt, the inventors have found that the amount of salt, in particular the amount of sodium salt, more particularly sodium chloride, in the meat and the fish can be lowered, without this affecting the good taste and without this requiring the addition of other substances, nor would this require an increase of the fat or sugar content with respect to the known meat or the known fish. This would be counterproductive in the pursuit of a healthy diet. In particular, with this invention the amount of sodium in the meat or the fish can be lowered by at least 10%, preferably at least 20%, often by at least 40% or 45% or more depending on the nature of the meat or the fish, without necessitating the use of additional flavour enhancers or an increased amount of flavour enhancers to bring about the usual taste appreciated by the consumer. On the contrary, it was established that the treatment with purified seawater imparts a special and intense taste and taste sensation to the meat or the fish, also with a lower content of sodium salts in the meat or the fish.

In a preferred embodiment the aqueous salt-containing solution further contains an amount of one or more thickening agents. The presence of thickener provides the advantage that the water uptake capacity of the meat, the meat products or the fish can be raised and a better binding capacity for binding moisture can be obtained, in particular for binding the seawater-containing aqueous solution. The high water uptake capacity ensures that the moisture loss of the cooked or prepared product with respect to the untreated starting product can be kept minimal. Injecting moisture into meat, e.g., ham or sausage, is a known technique of increasing the weight thereof compared with the original weight. It was also found that the presence of the one or more thickeners enables a long-term binding of the aqueous solution and the risk of moisture egress, also after preparation of the meat or the fish at high temperature, can be kept minimal. Thus, it is possible with this invention to improve the stability of the meat and the fish and to keep the moisture content at the desired level for a longer period of time.

Suitable thickeners are known to the skilled person and are commercially available. Examples include dextrose, glucose syrup, meal, polysaccharides, gum, alginates, pectin, guar gum, carob bean gum, starch, etc., or a mixture of two or more of these thickeners. This makes it possible to refrain from adding the usual phosphate and to bring about a good fixation of the moisture in the meat or the fish, as well as a good elasticity of the meat. Preferably, use is made of alginate, glucose syrup as solid or liquid, dextrose, one or more polysaccharides or a mixture of two or more of the aforementioned substances. Alginates are preferred because of their fat absorbing ability. Although small amounts of gelatin may be used, this is not preferred because of the thickening effect of gelatin at low temperature, which is at least partly lost upon heating and may lead to unwanted loss of moisture.

The amount of thickening agents present in the aqueous solution can be varied within wide limits, taking into account the intended thickening or viscosity increase. Typically, however, the amount of thickener will range from 1-250 grams per litre of purified seawater, preferably 10-200 grams, more preferably 25-150 grams. However, the skilled person will seek to keep the amount of thickener as low as possible to minimize the risk of taste being affected. The inventors have now found that the use of purified seawater provides the advantage that the amount of thickener can be lowered in comparison with the known treatments methods, resulting in a reduced risk of taste being affected by the thickener. Without wishing to be bound to any theory, it is believed that seawater by nature has thickening properties. It is believed that the large variety of substances present in the seawater contributes to this.

The purified seawater, the nitrite-containing salt and the thickener thus cooperate to effect an optimum uptake and fixation of the aqueous salt-containing solution in the meat, meat products and/or the fish, so that these provide an agreeably juicy taste perception upon consumption, without entailing stickiness. The purified seawater, the nitrite-containing salt and the thickener also cooperate to provide a product with a good storage stability, desired colour, taste and taste intensity, also at a lowered salt content.

The amount of seawater-containing aqueous solution that is introduced according to the invention into the meat may vary within wide limits and is preferably chosen such that the intended weight increase of the meat can be effected, or that weight loss during the further treatment, for instance cooking, for instance boiling, can be minimized. Often, such an amount of aqueous solution is injected that an intended weight increase of 5-60% with respect to the original weight of the meat or the fish is achieved, preferably a weight increase of 10-50 wt.%, more preferably a weight increase of 15-40% with respect to the original weight of the meat or the fish. In general, the amount of injected aqueous solution varies from 5-60 wt.% with respect to the weight of the meat, preferably 10-50%, more preferably 15-40%. Typically, a part of the injected moisture will remain behind in the meat or the fish and a part will not be taken up and run out of the meat again. The amount of moisture that is taken up depends on various factors and varies, for instance, with the nature of the meat or the fish, the manner in which the aqueous solution is injected, the duration of contact, etc.

In the context of this invention, 'seawater' is understood to mean seawater originating from a natural seawater source, for instance, water originating from the ocean, the sea, an open or a closed arm of the sea, estuaries, salt water-containing lakes, etc. In the context of this invention, 'seawater' is understood to mean, for instance, seawater originating from the North Sea, the Baltic Sea, the Mediterranean, the Red Sea, the Dead Sea, or any other sea known to the skilled person. 'Purified seawater' is understood to mean that the seawater has been subjected to a minimal treatment that is necessary to remove large, perceptible undissolved substances and floating particles, as well as unwanted pollutants and/or contamination present in fresh seawater. The dissolved salt compounds and the concentration of the salt compounds in the purified seawater substantially correspond to those of fresh seawater. The purified water used in the method of this invention preferably originates from the North Sea, more preferably the Oosterschelde bay.

The aqueous solution that is used in this invention may consist exclusively of seawater as liquid. If desired, in addition to purified seawater, other liquid ingredients may be added to the aqueous solution, such as, for instance, water, broth, wine, alcohol, fatty substances, and the like, in the light of the intended end product. The liquid present in the aqueous solution of this invention will typically consist substantially of purified seawater. Preferably, the liquid present in the aqueous solution of this invention contains at least 50 vol. % of seawater with respect to the total liquid contents, more preferably at least 60 vol. %, most preferably at least 70 vol. %, often even 75 vol. % or more. In the context of this invention, 'water' is understood to mean fresh water stemming from the freshwater sources known to the skilled person, in particular drinking water.

Preferably, the aqueous solution used in the method of this invention contains seasoned seawater. The use of seasoned seawater, with the herbs tuned to the nature of the meat or the fish, provides a surprising combination of advantages and makes it possible to lower the amount of sodium salts and sodium in meat or fish and thereby obtain meat or fish of a special and pronounced taste despite a lower content of sodium salt, in that the herbs are able to penetrate the pores of the meat or the fish; a good storage stability without this necessitating addition of preservatives, and a reduced risk of unwanted discoloration. The herbs used can even contribute towards achieving a desired colour.

Seasoned purified seawater can be obtained in various ways, for instance, by adding soluble herb concentrates or extracts to the seawater, by extracting the herbs in purified seawater with or without heating of the seawater, by adding herbs as such, in powder form or granular form. Within the framework of this invention, however, it is also possible to add the herbs to the aqueous solution. The herbs impart an intensive taste to the meat, even at a lower content of salt, in particular sodium salts. The herbs used in this invention are typically the herbs that the skilled person is generally familiar with, such as mace, cardamom, thyme, rosemary, sage, marjoram, pepper, dill, paprika, chilli, celery, lovage, etc. Other herbs suitable for use in this invention are curry, soy sauce, paprika, tandoori, etc. The skilled person is able to choose the herb composition taking into account the nature of the meat and the intended taste. The herb composition is not limited to the aforementioned herbs and comprises the herbs commonly used by the skilled person. The amount of herbs can be varied within wide limits, taking into account the intended taste, the intended effect, the nature of the intended end product, and the nature of the meat or the fish, and typically ranges from 0.1-100 grams per litre, often 0.1-50 grams per litre of purified seawater which may or may not have been concentrated beforehand, preferably 0.5-20 grams, more preferably 1-10 grams. The use of herbs in combination with seawater imparts a special agreeable taste even if the seawater has a lower sodium salt content compared with the prior art method where use is made of fresh water to which salt was added. If the concentration of the herb mixture in the purified seawater is increased, a lesser amount of sodium salt in the seawater will suffice.

To realize a constant quality and composition of the purified seawater and/or to be able to realize a desired concentration of sodium salts, but preferably also of other salts of, for instance, calcium, potassium, magnesium, iron, zinc, etc., in the water, it is preferred, in this invention, to utilize seawater that was concentrated prior to the treatment of the meat. The extent to which the purified seawater is concentrated can vary within wide limits and will typically be chosen by the skilled person taking into account the chemical composition of the seawater and the intended final concentration of salt, in particular sodium salts, more particularly sodium ions. Often, however, the choice will be for an upconcentration of the seawater by at least 25%, preferably by at least 30%, more preferably by at least 40%, most preferably by at least 60%. An upconcentration of 25% is understood to mean that, for instance, 100 litres of seawater are upconcentrated to 75 litres. The purified seawater is preferably concentrated such that the solubility of the salts present in the seawater is preserved and the risk of the formation of precipitate at the temperature of use of the upconcentrated seawater is minimal. The inventors have found that when concentrated purified seawater is used, adding salt in the form of sodium chloride to the treatment solution can be refrained from, so that the amount of added sodium in the meat or the fish can be lowered. For concentrating the purified seawater, any technique considered suitable by the skilled person can be used, for instance evaporating the water, osmosis, etc.

An optimum taste of the meat can be obtained when purified concentrated seawater is used that contains, per litre of water, 2-350 g of sodium chloride, preferably 5-250 g, more preferably 15-100 g, most preferably 15-50 g. Depending on its origin, the purified seawater can contain more or less salt, in particular more or less sodium chloride, and it may be desirable to add additional sodium chloride to achieve the desired taste and the desired sodium chloride concentration in the aqueous solution. Preferably, however, no sodium chloride is added.

The purified seawater used in the invention can contain, in addition to sodium chloride, various other salts in divergent concentrations, depending on the origin of the seawater. The purified concentrated seawater can contain, for instance, magnesium chloride, calcium chloride, sodium sulphate and magnesium bromide, though other salts may be present. All these salts contribute to the particular taste effect that is imparted to the meat or the fish by the seawater. In a preferred embodiment, the seawater preferably contains, per litre of water, 0.5-50 g or 0.5-25 g of magnesium chloride, more preferably 0.5-15 g. The purified concentrated seawater preferably contains, per litre of water, 0.05-20 g or 0.05-15 g of calcium chloride, more preferably 0.25-10 g of calcium chloride. The purified concentrated seawater can also contain 0.2-50 g of sodium sulphate, preferably 0.5-20 g. The purified concentrated seawater may further contain magnesium bromide in an amount of 0.05-20 g, preferably 0.05-10 g. If desired, an amount of one or more of the aforementioned salts can be added to the purified seawater to effect the desired concentration in the aqueous solution and to realize the intended taste effect.

In the context of this invention, 'aqueous solution' is understood to mean an aqueous liquid which, in addition to a multiplicity of dissolved substances, can also contain an amount of undissolved substances, such as for instance herbs. The amount of non-dissolved or non-soluble substances will typically be tuned to the technique that is used for contacting the meat or the fish with the aqueous solution, and can vary within wide limits.

The purified seawater-containing aqueous solution can, if desired, contain a wide range of commonly used ingredients, for instance, meal, buckwheat meal, milk, egg, thickeners and other additions, etc. If desired, for instance for the purpose of simplifying the recipe, a mixture can be prepared of herbs and one or more of the aforementioned ingredients, and the mixture as a whole can be mixed with the purified seawater.

Preferably, the aqueous salt-containing solution of this invention contains at least 5 vol. % of seawater with respect to the total amount of aqueous solution, more preferably at least 10 vol. %, or 20 vol. %, 25 vol. % or more, 50 vol. % or more, at least 60 vol. %, at least 70 vol. %, often even 75 vol. % or more.

For contacting the meat or the fish with the purified seawater-containing solution, the techniques generally known to the skilled person can be used, taking into account the nature of the meat and the intended effect. Suitable techniques include *inter alia* injecting the purified seawater-containing aqueous solution into the meat or the fish; this is mainly used in the preparation of large pieces of meat, shoulder, fillet, ham to guarantee a sufficient penetration depth. Preferably, the purified seawater-containing aqueous solution is injected at a multiplicity of positions to obtain a uniform taste, elasticity and moisture distribution over the entire piece of meat and to effect a uniform activation of the contractile muscle proteins. Contacting with the purified seawater-containing aqueous solution may or may not be followed by resting, massage or drumming, for a period that may range from a few minutes to a few days so as to effect the most uniform distribution possible of the solution over the meat or the fish and to activate the contractile muscle proteins. The seawater proves to be able to dissolve the proteins released from the meat and to effect a redistribution over the entire meat mass during drumming. Contacting with the purified seawater-containing solution may be followed by resting the meat or fish for a time, to allow a uniform spread over the meat or the fish. The rest period may range from a few minutes to hours or even days, depending on the size and the nature of the meat or the fish and the intended effect. Other suitable techniques for contacting include marinating the meat or the fish in the purified seawater-containing aqueous solution optionally followed by rinsing, immersion, coating the meat with the purified seawater-containing aqueous solution, e.g. using a brush, spraying with or mixing with the purified seawater-containing aqueous solution or a combination of two or more of these techniques.

Contacting the meat or the fish with the purified seawater-containing aqueous solution is preferably carried out at a temperature between -5°C and 35°C, preferably between -2°C and 30°C, more preferably between -2 and 15°C. At these temperatures the seawater is able to penetrate the meat with minimal risk of thickening and there is a minimal risk of the onset of decay. This is important since thickening of the purified seawater-containing aqueous solution normally takes place at higher temperature during cooking of the meat. Thickening prior to cooking at high temperature will typically have as a consequence that the binding effect diminishes or is actually lost, which is at the expense of the juiciness of the meat or the fish.

The period of time during which the meat is brought into or held in contact with the purified seawater-containing aqueous solution can be varied within wide limits. In case of injection into the meat or the fish, the period of time will be quasi permanent. In the case of marinating and immersing, the contact time can be controlled. The skilled person is able to choose the contact time needed, taking the intended taste effect into account.

The purified seawater used in the method of this invention is preferably subjected to one or more purification steps prior to the treatment. The purification steps preferably comprise one or more filtration steps whereby the natural seawater is filtered for removing unwanted undissolved materials and unwanted floating particles. This filtration is preferably carried out stepwise utilizing filters having a varying mesh width which becomes smaller with increasing filtration. Typically, a few initial filtration steps will be carried out for removing coarse particles, followed by one or more filtration steps for removing finer particles. The skilled person will typically seek to remove all particles having an average particle size greater than 10 microns, preferably greater than 5 microns, more preferably greater than 1 micron and greater than 0.5 micron.

Seawater generally has a complex composition and contains a large number of dissolved substances, such as inorganic substances, organic substances, gases, but also floating materials such as sludge particles, plankton and algae. The organic substances comprise a large variety of substances of diverging origin, *inter alia,* residues of dead plants and animals, plankton, i.e., organisms living in water chiefly floating and drifting, comprising phytoplankton which is typically incapable of locomotion, and zooplankton or animal plankton, which does have locomotive power. The filtration in this invention is preferably carried out such that an amount of algae and plankton remains present in the seawater. In fact, the inventors have established that this organic material imparts a special taste to the meat or fish treated according to the invention, and functions as flavour enhancer. The inventors also believe, without wishing to be bound by any theory, that this organic material contributes to the special properties of the seawater, *inter alia* the thickening properties.

The purification steps for purifying the seawater preferably include also an antimicrobial treatment for removing unwanted microorganisms from the seawater. The antimicrobial treatment is preferably carried out with a technique that is suitable for use with foods intended for consumption. Any technique known to the skilled person can be used, for instance, irradiation with gamma radiation, UV radiation.

After being treated with the purified seawater-containing aqueous solution, the meat or the fish is suitable to be prepared or cooked in the usual manner. It may be desirable to remove the seawater wholly or partly from the meat or the fish prior to the preparation process, for instance by rinsing, but this is not requisite.

The invention further relates to purified seawater for use in the method as described hereinabove. The composition of seawater may vary slightly depending on the origin of the water. In general, however, the elements accounting for 99% of the salts present are chloride (Cl⁻), sodium (Na⁺), sulphate (SO²₄-), magnesium (Mg²⁺), calcium (Ca²⁺) and potassium (K⁺). Other dissolved elements that are typically present in much lower concentration are carbon, bromide (Br), strontium, fluoride (F-), boron, inorganic phosphates, and nitrogen compounds such as nitrate and nitrite.

The seawater preferably used in this invention typically contains the following dissolved compounds in the following concentrations (per litre of water):
- 2-350 g of sodium chloride, preferably 5-250 g, more preferably 15-100 g, most preferably 15-50 g, depending on the origin of the purified seawater and the extent to which it was concentrated
- 0.5-25 g of magnesium chloride, more preferably 0.5-15 g
- 0.05-15 g of calcium chloride, preferably 0.25-10 g
- 0.2-50 g of sodium sulphate, preferably 0.5-20 g
- 0.05-250 g of magnesium bromide, preferably 0.05-10 g.

Preferably, the seawater that is applied in the aqueous solution of this invention has been upconcentrated, by at least 15%, preferably by at least 25%, more preferably by at least 30%, most preferably by at least 40%. Upconcentration of the seawater will typically be carried out such that the solubility limit of the substances dissolved in the seawater is not exceeded and that precipitation is prevented. After all, the invention seeks to effect a taste distribution that is as homogeneous as possible, both with small and with large pieces of meat or fish.

The invention also relates to a purified seawater-containing aqueous solution which contains an amount of at least one thickening agent and an amount of a nitrite-containing salt, as described above. The invention also relates to a purified seawater-containing aqueous solution which contains an amount of herbs, whose nature and amount can be varied within wide limits, taking into account the nature of the meat or the fish and the intended taste, as described above.

The purified seawater or the purified seawater-containing aqueous solution according to the invention can be used immediately after preparation or it can be temporarily stored. Storage is preferably done at low temperature to prolong the storage life, preferably at a temperature of -5 to 35°C, more preferably -5 to 30°C, most preferably -2 to 15°C, often -2 to 10°C.

The invention also relates to treated meat obtained with the above-described method. The invention also relates to treated fish obtained with the above-described method.

The above-described method is suitable for producing the usual products available at the butcher's or fish shop, *inter alia,* dried or smoked country ham, cooked ham, cooked shoulder of ham, cured side of pork, salted meat, belly fat, smoke-dried meat, uncooked ham, nut ham, frying sausage, black pudding, ring bologna, luncheon sausage, luncheon meat, grilled sausage, sausage with smoked-bacon bits, minced meat, meatloaf, etc. without being limited thereto.

This invention further relates to prepared meat obtained by preparing treated meat obtained with the above-mentioned method.

Techniques suitable for preparing the treated meat or the treated fish are generally known to the skilled person and include, *inter alia,* boiling whereby the meat or the fish is wholly or partially cooked in boiling liquid, for instance water, broth, wine, to which fatty matter or herbs have been added; blanching, i.e., boiling briefly so as to render the meat or fish incompletely cooked; poaching; steaming; frying, for instance in hot air, in fatty matter in a common pan, broiling, cooking au gratin, sautéing, barbecuing, deep-frying, braising or simmering in little moisture, roasting, smoking, drying, etc. Cooked ham can be prepared, for instance, by boiling a piece of pork shoulder meat which was treated with the method of this invention, whereby an amount of purified, preferably seasoned seawater such as described above was injected into the meat. Uncooked ham can be prepared, for instance, by drying a piece of pork shoulder meat which was treated with the method of this invention, whereby, for instance, an amount of purified, preferably seasoned seawater as described above was injected into the meat. The techniques mentioned are intended merely as examples, without the invention being limited thereto.

The invention also relates to prepared fish obtained by preparing treated fish obtained with the above-described method.

The invention is further elucidated in and by the example below.

### Comparative experiment

2 kg of raw pork for preparing ham were injected with a salt solution. The salt solution was prepared as follows : 40 g of a herb mixture were added to 10 litres of drinking water, in which 1400 g of sodium chloride are dissolved. Further, to the water were added 1000 g of a mixture of butcher's herbs, dextrose, dry glucose syrup and milk. Then the ham was cooked by boiling the ham.

The salt solution was injected at a temperature of -2°C into the meat until a weight increase of at least 25% was achieved. Then the thus injected ham was stored for 48 hours to effect a proportional distribution of the seawater over the entire ham.

100 grams of the thus prepared ham contained 900.0 mg of sodium, 300.0 mg of potassium, 15.0 mg of calcium, 140.0 mg of phosphorus and 72 g of water.

The ham was judged to be flavourful and juicy by a taste panel of 20 members.

### Example 1

An aqueous solution was prepared by upconcentrating purified water from the Oosterschelde by 15% by boiling the Oosterschelde water. After cooling to room temperature, to 10 litres of this concentrated seawater, 800 g of common salt or sea salt, 50 grams of sodium nitrite, 40 grams of a herb mixture were added and 1,000 g of butcher's herbs containing dextrose, dry glucose syrup and milk, as used in the comparative experiment.

2 kg of raw pork as used in the comparative example above for preparing ham were injected with the above salt solution until the weight of the ham had increased by 25%. Then the thus injected ham was stored for 48 hours to effect a proportional distribution of the seawater over the entire ham.

The ham contained 470 mg of sodium per 100 g of ham.

The ham was judged to be extremely flavourful and juicy by a taste panel of 20 members, and presented a taste sensation not tasted before.

### Example 2

An aqueous solution was prepared starting from 2 litres of purified seawater to which 0.25 g of sodium nitrite was added, 34.75 grams of common salt, 5 grams of pepper, 3 grams of herbs, and 50 g of dextrose. After thorough mixing and cooling, 8 kg of fillets of chicken were introduced into the aqueous solution and properly mixed. After having marinated in this mixture for 12 hours, the fillets of chicken were cooked in the known manner in a vacuum bag at 80°C.

The cooked fillets of chicken were judged to be extremely flavourful and juicy by a taste panel of 20 members, and presented a taste sensation not tasted before.

## Claims

1. A method for treating meat or fish with a salt-containing aqueous solution for influencing the organoleptic properties thereof, wherein at most partly prepared meat or fish is contacted with the aqueous salt-containing solution, **characterized in that** the aqueous salt-containing solution comprises purified seawater and an amount of a nitrite-containing salt.

2. A method according to claim 1, wherein the aqueous salt-containing solution further contains an amount of one or more thickening agents, preferably selected from the group of alginate, glucose syrup, dextrose, a polysaccharide, or a mixture of two or more of the aforementioned substances.

3. A method according to claim 1 or 2, wherein the one or more thickening agents is present in an amount of 1-250 grams per litre of purified seawater.

4. A method according to any one of the preceding claims, wherein the aqueous solution contains 5-250 grams per litre of a nitrite-containing salt which contains a maximum of 5 wt.% of nitrite.

5. A method according to any one of the preceding claims, wherein the aqueous solution contains 4-225 grams of common salt.

6. A method according to any one of the preceding claims, wherein the seawater is seasoned.

7. A method according to claim 1 or 2, wherein the purified seawater is concentrated for relatively increasing the salt concentration, prior to contacting with the meat.

8. A method according to any one of the preceding claims, wherein the purified seawater contains algae.

9. A method according to any one of the preceding claims, wherein contacting is effected by a procedure chosen from the group of injecting the purified seawater-containing aqueous solution into the meat or the fish, coating the meat or the fish with the purified seawater-containing aqueous solution, marinating or immersing the meat or the fish, mixing or spraying the meat or the fish, or a combination of two or more of these procedures.

10. A method according to claim 9, wherein the amount of injected purified seawater-containing aqueous solution ranges from 5-60 wt.% with respect to the weight of the meat or the fish, preferably 10-50 %, more preferably 15-40 %.

11. A method according to any one of the preceding claims, wherein the meat is selected from the group of muscle meat, offal or ground meat of beef, pork, game or fowl or a mixture of two or more thereof.

12. A method according to any one of claims 1-11, wherein use is made of the white or dark muscles of fish or a mixture thereof.

13. Purified seawater for use in the method according to claims 1-12.

14. Purified seawater according to claim 13, containing algae and/or plankton.

15. Prepared meat obtained by preparing treated meat obtained with the method according to any one of claims 1-12.

16. Prepared meat according to claim 15, wherein the meat contains less than 900 mg of sodium per 100 g of meat, preferably less than 750 mg, more preferably less than 500 mg, most preferably less than 120 mg.

17. Prepared meat according to claim 15 or 16, containing 5-60%, with respect to the weight of the meat, of added purified seawater-containing aqueous solution according to any one of claims 13 or 14.

18. Prepared fish obtained by preparing treated fish obtained with any one of claims 1-12.
